# EUROPEAN PATENT APPLICATION

(11) **EP 4 300 787 A1**
(43) Date of publication of application: **03.01.2024**
(21) Application number: 22182391.7
(22) Date of filing: 30.06.2022
(51) Int. Cl.: H02K 5/10, H02K 11/33

(54) **ARRANGEMENT, COMPRISING AN ELECTRIC MOTOR AND AN INVERTER**

(71) Applicant: Valeo eAutomotive Germany GmbH, 91056 Erlangen (DE)
(72) Inventor: Eichner, Markus, 91056 C/o VSeA, Erlangen (DE); Karakuz, Jakob, 91056 C/o VSeA, Erlangen (DE)
(74) Representative: Valeo Powertrain Systems

(57) **Abstract**

Arrangement, comprising an electric motor, housed in a motor casing (2, 10, 16), an inverter, housed in the motor casing (2, 10, 16) or in a separate inverter casing (17), busbars (1, 9, 15), electrically connecting the electric motor and the inverter, through openings (3, 11, 19) in the motor casing (2, 10, 16) or the inverter casing, through which the busbars (1, 9, 15) extend, a sealing means (8, 20) for sealing a gap (21) between the busbars (1, 9, 15) and the through openings (3, 11, 19), wherein the motor casing (2, 10, 16) has a dedicated surface in the area of the through openings (3, 11, 19), on which the sealing means (8, 20) is applied.

## Description

The present invention relates to an arrangement, comprising an electric motor, housed in a motor casing, an inverter, housed in the motor casing or in a separate inverter casing, busbars, electrically connecting the electric motor and the inverter, through openings in the motor casing, through which the busbars extend, and a sealing means for sealing a gap between the busbars and the through openings. Electric motors and inverters are widely used in electrically powered vehicles or hybrid vehicles. Usually, the electric motor and the inverter are received in a motor casing or in separate casings for motor and inverter. Several electrical connections are necessary between the electric motor and the inverter for transmitting signals and electric power. For the transmission of electric power usually rigid busbars are used, which are preferably made from copper. It is necessary to seal the interface between motor and inverter, through which the busbars extend, in order to avoid the exchange of harmful gases or other media between motor and inverter. The interior of the inverter comprises power electronic components that must be protected from external influences.

DE 20 2019 106 902 U1 discloses a busbar for an electrically powered vehicle, wherein the busbar and other parts are overmoulded by injection moulding. However, this method is complex, costly and not very flexible.

Therefore, the problem on which the present invention is based, is to provide an arrangement comprising an electric motor and an inverter, whereby a gap between busbars and through openings in the motor casing is reliably sealed.

This problem is solved by an arrangement with the features of claim 1.

According to the invention, the motor casing or the inverter casing has a dedicated surface in the area of the through openings, on which the sealing means is applied. The invention is based on the idea that the motor casing has a special area where the sealing means can be deposited on. The sealing means closes a gap between the busbars and the motor casing, so that no gases or other media can enter the motor casing from the inverter (or from an inverter housing) or vice versa. After applying the sealing means it is cured and permanently closes the gap between the busbars and the motor casing.

According to a preferred embodiment the dedicated surface comprises one or more steps around a through opening. These steps, which preferably have a larger diameter at the outer side of the motor casing, improve the adhesion between the sealing means and the motor casing. Preferably, the steps are arranged symmetrically around the through openings of the motor casing.

It may also be envisaged that a through opening has a slanted section with a larger diameter at the inner side of the motor casing. The slanted section facilitates insertion of the busbars through the through holes of the motor casing.

It is particularly preferred that an insert comprising a hole for the busbar is positioned in the through opening, wherein the dedicated surface for the sealing means extends around the hole. The insert may also comprise multiple holes for busbars. The insert narrows the through opening of the motor casing, so that only remaining gap between the whole of the insert and the busbar has to be sealed. Therefore, by using the insert it is guaranteed that the busbar, which penetrates the hole of the insert, is positioned correctly.

According to a preferred embodiment of the inventive arrangement the insert has a basically U-shaped cross-section. In the installed state end sections of the insert are supported on the outer side of the motor casing. Preferably, the insert may be connected to the motor casing by a snap-in connection.

Preferably, the insert comprises a molded seal or an O-ring contacting the motor casing.

It may be provided that an insert comprising a section with multiple holes is positioned in the through opening, wherein the sealing means is applied through the holes on the dedicated surface of the motor casing. In this case the insert and the outer side of the motor casing are connected at several positions by the sealing material. The gap between the insert and the busbar is also sealed by the sealing material. Preferably, the section of the insert comprising the holes is positioned on the outer side of motor casing, surrounding the through opening of the motor casing. Preferably, the insert is made of an electrically insulating material like a plastic material.

According to the invention it is preferred that the sealing means is silicone or any other curing medium dispensed in place.

The invention is explained by means of preferred examples with reference to the drawings. The drawings are schematic representations and show:
- Fig. 1: a sectional view of a busbar extending through a motor casing according to a first embodiment;
- Fig. 2: a sectional view of a busbar extending through a motor casing according to a second embodiment; and
- Fig. 3: a sectional and perspective view of a busbar extending through a motor casing according to a third embodiment.

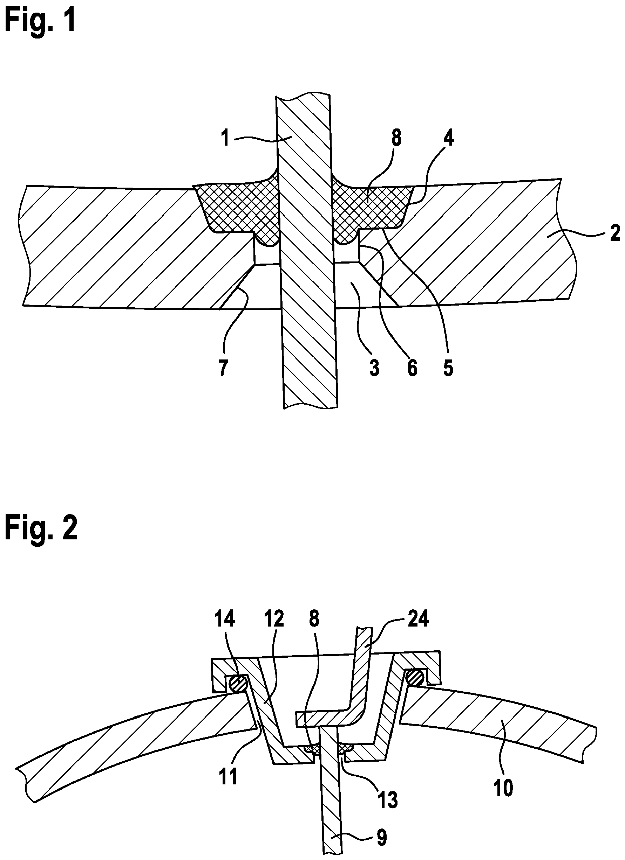

Fig. 1 is a sectional view of a busbar 1 extending through a motor casing 2. The motor casing 2 receives an electric motor for an electrically powered vehicle. The electric motor is connected to an inverter which transforms direct current from a battery into a multiple phase alternating current. The inverter, which is not shown in Fig. 1, is connected to the upper end of the busbar 1. The electric motor and the inverter are electrically connected by the busbars 1, whereby one busbar is provided for each phase. The busbar 1 has a rectangular cross-section and is made out of copper. It extends through a through opening 3 in the motor casing 2.

The diameter of the through opening 3 is chosen such that the busbar 1 does not contact the motor casing 2. At the outer side of the motor casing 2 the through opening 3 has a slanted section 4, whereby its diameter decreases from the outer side to the inner side. Inwardly, a step 5 follows the slanted section 4. In the middle of the through opening 3 a section 6 with the smallest diameter is provided, followed by another slanted section 7 with a diameter which increases to the inner side of the motor casing 2.

Dedicated surface is provided in the area of the through opening 3, in particular on the slanted section 4, the step 5 and the section 6, on which a sealing means 8 is applied. In this embodiment silicone is used as sealing means. The cured silicone bridges the gap between the motor casing 2 and the busbar 1 and closes it. Consequently, gases of other media cannot enter the motor casing 2 from outside or leave the motor casing 2 through the gap. The sealing means 8 is applied around the busbar 1 having the rectangular cross-section.

Fig. 2 is a sectional view of a busbar 9 extending through a motor casing 10. The motor casing 10 has a through opening 11, in which an insert 12 comprising a hole 13 for the busbar 9 is provided. The insert 12 has a U-shape, whereby the hole 13 is provided in a middle section. Outer ends of the insert 12 are supported on the border of the through opening 11. The outer end of the insert 12 is provided with a sealing in the form of an O-ring 14. A sealing means 8 is applied on a dedicated surface in the area of the through opening 11, namely on the middle section of the U-shaped insert 12. The sealing means 8 covers a gap between the busbar 9 and the insert 12. The busbar 9 and another busbar 24, which belongs to the inverter, are joined together by welding.

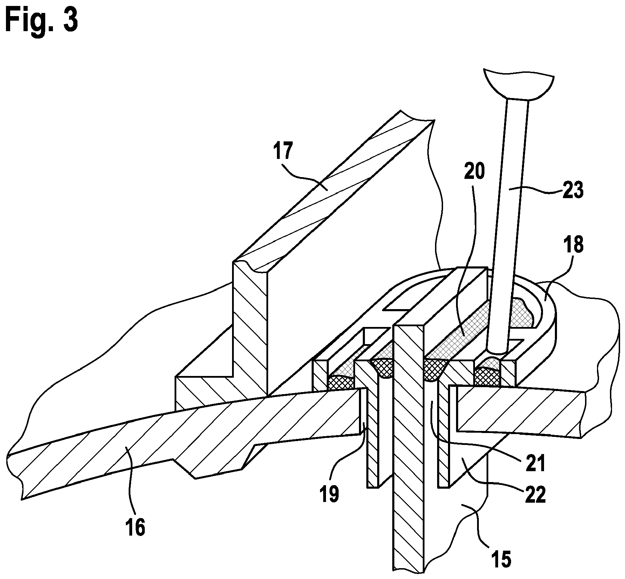

Fig. 3 is a sectional and perspective view and shows a busbar 15 extending through a through opening 19 of a motor casing 16. An inverter casing 17 is attached at the outer side of the motor casing 16. In this embodiment an insert 18 with multiple holes is positioned in the through opening 19. The motor casing 16 has a dedicated surface, on which a sealing means 20 is applied, in order to seal a gap 21 between the insert 18 and the busbar 15. The insert 18 has several holes for the busbars 15, which are separated from each other by sections of the insert 18. As can be seen in Fig. 3, at both sides of the busbar 15 the insert 18 is provided with parallel vertical sections 22, which extend through the through opening 19.

A dispensing needle 23 is used to apply the sealing means 20 on the gaps between the vertical sections 22 and the busbar 15. In addition the sealing means 20 is also applied through the holes of the insert 18 onto the outer side of the motor casing 16.

### List of reference numbers

- 1: busbar
- 2: motor casing
- 3: through opening
- 4: slanted section
- 5: step
- 6: section
- 7: slanted section
- 8: sealing means
- 9: busbar
- 10: motor casing
- 11: through opening
- 12: insert
- 13: hole
- 14: O-ring
- 15: busbar
- 16: motor casing
- 17: inverter casing
- 18: insert
- 19: through opening
- 20: sealing means
- 21: gap
- 22: vertical section
- 23: dispensing needle
- 24: busbar

## Claims

1. Arrangement, comprising:
- an electric motor, housed in a motor casing (2, 10, 16),
- an inverter, housed in the motor casing (2, 10, 16) or in a separate inverter casing (17),
- busbars (1, 9, 15), electrically connecting the electric motor and the inverter,
- through openings (3, 11, 19) in the motor casing (2, 10, 16), through which the busbars (1, 9, 15) extend,
- a sealing means (8, 20) for sealing a gap (21) between the busbars (1, 9, 15) and the through openings (3, 11, 19),
**characterized in that** the motor casing (2, 10, 16) or the inverter casing has a dedicated surface in the area of the through openings (3, 11, 19), on which the sealing means (8, 20) is applied.

2. Arrangement according to claim 1, wherein the dedicated surface comprises one or more steps (5) around a through opening (3).

3. Arrangement according to claim 1 or 2, wherein a through opening (3) is broadened at the outer side of the motor casing (2).

4. Arrangement according to any of the preceding claims, wherein a through opening (3) has a slanted section with a larger diameter at the inner side of the motor casing (2).

5. Arrangement according to claim 1, wherein an insert (12, 18) comprising a hole (13) for the busbar (9, 15) is positioned in the through opening (11, 19), wherein the dedicated surface for the sealing means (8, 20) extends around the hole (13).

6. Arrangement according to claim 5, wherein the insert (12) has a basically U-shaped cross-section with end sections supported on the outer side of the motor casing (10).

7. Arrangement according to claim 5 or 6, wherein the insert (12) comprises a molded seal or an O-ring (14) contacting the motor casing (10).

8. Arrangement according to claim 5, wherein an insert (18) comprising a section with multiple holes is positioned in the through opening (19), wherein the sealing means (20) is applied through the holes on the dedicated surface of the motor casing (16).

9. Arrangement according to claim 8, wherein the section of the insert (18) comprising the holes is positioned on the outer side of motor casing (16), surrounding the through opening (19) of the motor casing (16).

10. Arrangement according to any of claims 5 to 9, wherein the insert (12, 18) is made of an electrically insulating material, preferably a plastic material.

11. Arrangement according to any of the preceding claims, wherein the sealing means (8, 20) is silicone or any other curing medium.
